# EUROPÄISCHE PATENTSCHRIFT

(11) **EP 1 287 335 B1**
(45) Veröffentlichungstag und Bekanntmachung des Hinweises auf die Patenterteilung: **11.07.2007**
(21) Anmeldenummer: 01933961.3
(22) Anmeldetag: 14.05.2001
(51) Int. Cl.: G01N 21/53, G01N 21/59

(54) **VERFAHREN UND VORRICHTUNG ZUR ERMITTLUNG DER GEMISCHZUSAMMENSETZUNG BELIEBIGER MEDIEN BZW. ZUR STOFFMENGENMESSUNG**
METHOD AND DEVICE FOR DETERMINING ANY FLUID MIXTURE COMPOSITION AND FOR MEASURING MATERIAL QUANTITY
PROCEDE ET DISPOSITIF PERMETTANT DE DETERMINER LA COMPOSITION DU MELANGE DE FLUIDES QUELCONQUES ET DE MESURER LA QUANTITE DE MATIERE

(30) Priorität: 13.05.2000 DE 10023639
(43) Veröffentlichungstag der Anmeldung: 05.03.2003
(73) Patentinhaber: Arnold, Gerd H., 79793 Wutöschingen / Schwerzen (DE)
(72) Erfinder: KLAAS, Kai, 79761 Waldshut-Tiengen (DE)
(74) Vertreter: Weiss, Peter
(86) Internationale Anmeldenummer: PCT/EP2001/005450
(87) Internationale Veröffentlichungsnummer: WO 2001/088508

(56) Entgegenhaltungen:
- EP-A- 0 029 537
- EP-A- 0 463 166
- EP-A- 0 539 824
- US-A- 4 687 337
- US-A- 5 572 032
- US-A- 5 898 487

## Beschreibung

Die Erfindung bezieht sich auf ein Verfahren zur Ermittlung der Gemischzusammensetzung einer Flüssigkeit mittels Ermittlung der Absorption eines Lichtes, insbesondere Infrarotlichtes, welches von einem Sender in einem Gehäuse in das zu untersuchende Medium ausgesandt und dessen nichtabsorbierte bzw. nichtreflektierten Bestandteile von einem Empfänger in einem Gehäuse erfasst werden, wobei das Licht direkt von Sender zu Empfänger durch das Medium geschickt wird.

In vielen, insbesondere industriellen Bereichen ist es notwendig, die Gemischzusammensetzung eines Mediums bzw. die Stoffmenge zu bestimmen. Nur beispielhaft soll auf die Trübungsmessung bei der Wasseraufbereitung, die Bestimmung der Gemischzusammensetzung bei der Lebensmittelindustrie, chemischen und pharmazeutischen Industrie, Papierindustrie, Textilindustrie, beispielsweise den Färbegrad eines Textils, der Getränkeindustrie, dem Bergbau etc., und auf die Stoffmengenmessung beispielsweise bei der Bestimmung von Foliendicken verwiesen werden.

Es kommen gegenwärtig im wesentlichen zwei Verfahren zum Einsatz, das Streulicht- und das Durchlichtmessverfahren. Bei der Trübungsmessung (Turbidimetrie) ist für schwächere Trübungen die Messung der gestreuten Strahlungsleistung (Streulichtverfahren) besser geeignet. Bei dieser Nephelometrie wird Licht in das zu untersuchende Medium eingestrahlt, das an den darin enthaltenen Teilchen gestreut wird. Die Intensität des Streulichtes, das die Messzelle in einem bestimmten Winkel (meist 90°) verlässt, wird mit einer Fotodiode gemessen.

Bei stärkeren Trübungen ist dagegen das Durchlichtmessverfahren besser geeignet, das die Schwächung der Strahlungsleistung bei Durchgang durch das Medium fotometrisch misst.

Nachteilig an allen bekannten, auf dem Markt befindlichen Messgeräten ist, dass von keinem gleichzeitig besonders schwach absorbierende wie besonders stark absorbierende Medien gemessen werden können. Prinzipbedingt lassen sich beispielsweise stark absorbierende Medien nicht mit dem Streulichtverfahren messen, weil das Licht gar nicht mehr in das Medium eindringen kann. Ist andererseits beim Durchlichtmessverfahren der Abstand zwischen Sender und Empfänger zu gross, führt dies bei sehr stark absorbierenden Medien ebenfalls zu einem Versagen des Messprinzips (bei zu grossem Abstand kommt schlicht kein verwertbares Messsignal zustande).

Desweiteren besteht der Sender bei vielen Geräten meist nur aus einer einzigen Sendediode. Wegen der dabei vorhandenen, viel zu kleinen Querschnittsfläche des Messstrahles führen bereits kleinste Inhomogenitäten oder Körnigkeiten des. Mediums zu starken Schwankungen des Messsignals. Ausserdem ist ein solches Messgerät äusserst empfindlich gegen Ablagerungen auf der Sender- bzw. Empfängerdiode.

Ferner macht die winzige Ausdehnung des Messstrahls sowie das stark inhomogene Strahlungsfeld ein Ausrichten von Sender und Empfänger bei einer variablen Anordnung praktisch unmöglich. Geringste Abweichungen von dieser Ausrichtung, beispielsweise durch Vibrationen oder Schläge hätten drastische Messsignaländerungen und Fehlkalibrierungen zur Folge.

Aus der EP-A 0 029 537 ist ein Verfahren zur Detektierung von Partikeln in einem Gasstrom bekannt. Dabei durchfliegen die Partikel eines Laserstrahls. Die Änderung der Lichtintensität wird von einem photoelektrischen Sensor erfasst.

Aus der EP-A 0 463 166 ist eine Vorrichtung zur Messung der optischen Dichte von Gas bekannt. Dabei wird längs einer optischen Achse ein Strahler, eine Mess-Durchströmkammer und ein Photoempfänger untergebracht. Mittels dieser Einrichtung wird vorzugsweise die Analyse der optischen Dichte von Kraftfahrzeugauspuffgasen durchgeführt.

Die US-A 4 687 337 befasst sich mit der Bestimmung des Koeffizienten eines atmosphärischen Aerosols. Dies geschieht ebenfalls mit Hilfe der Bestimmung der Änderung eines Lichtstrahls.

In der US-A 5, 572 032 ist ein Gerät zum Analysieren von Gas beschrieben, mit dem gleichzeitig zwei oder mehrere Komponenten ermittelt werden können. Die entsprechende Vorrichtung umfasst zwei Messzellen, Lichtquellen, Gasfilterzellen usw.

Ein Verfahren der o.g. Art ist aus der EP-A 0 539 824 bekannt. Diese zeigt ein Spektrometer für die Durchführung von turbidimetrischen und colormetrischen Messungen. In einem entsprechenden Gehäuse ist eine Lichtquelle vorgesehen, welche Licht durch eine entsprechende Optik und einen Filter schickt. Danach durchquert das Licht die zu bestimmende Probe. Das durch die Probe durchtretende Licht wird von einem Detektor aufgefangen. Ein zweiter Detektor beobachtet dagegen einen Referenzlichtstrahl, so dass ein Vergleich zwischen Referenzlichtstrahl und dem Licht, welches durch die Probe gegangen ist, durchgeführt werden kann.

Der vorliegenden Erfindung liegt die Aufgabe zu Grunde, ein Verfahren und eine Vorrichtung der o. g. Art zu entwickeln, mit denen gleichzeitig besonders schwach absorbierende wie besonders stark absorbierende Medien gemessen werden können und insbesondere Fremdlicht fast völlig ausser Acht gelassen werden kann.

Zur Lösung dieser Aufgabe führen die Merkmale nach Anspruch 1*,* bzw. 5.

In einer entsprechenden Vorrichtung sind Sender und/oder Empfänger fern einer Gehäuseöffnung in das Innere eines Gehäuses eingesetzt. Hierdurch wird vermieden, dass direktes Fremdlicht insbesondere auf den Empfänger trifft und damit das Messergebnis verfälscht. Aus diesem Grunde sind auch Sender und/oder Empfänger in einem bevorzugt stangenförmigen Gehäuse angeordnet, wobei diese bevorzugt stangenförmigen Gehäuse etwa parallel zueinander stehen, so dass sich die Gehäuseöffnungen von Sender und Empfänger seitlich gegenüber liegen. Das Medium kann sich frei zwischen den Stangen bewegen, ein Eintritt für direktes Fremdlicht ist aber weitestgehend ausgeschlossen.

Um noch weiter Fremdlicht zu unterdrücken, kann es sich als ratsam erweisen, das Innere der jeweiligen Kanäle zu Sender bzw. Empfänger schwarz zu färben. Hierdurch wird eine Reflexion von Fremdlicht auf die Empfänger vermieden.

Der Abstand zwischen den Gehäusen ist veränderbar. Dies geschieht in der vorliegenden Erfindung dadurch, dass die entsprechenden Gehäuse selbst verstellt werden. Bevorzugt kann die Veränderung des Abstandes kontinuierlich erfolgen.

Die Veränderbarkeit des Abstandes ist ein wesentlicher Punkt der vorliegenden Erfindung. Sie ermöglicht es, dass ein sehr enger Abstand bei stark absorbierendem Material gewählt werden kann, während sich die beiden Gehäuse bei weniger absorbierendem Material weiter weg voneinander befinden. Die Absorptionskoeffizienten der jeweiligen Medien können in einem derart grossen Bereich schwanken, dass Messgeräte mit einem festen Abstand auch nicht mit der aufwendigsten Elektronik dazu gebracht werden können einen ähnlich grossen Absorptionskoeffizientenbereich abzudecken, wie die vorliegende Erfindung. Die kontinuierliche Veränderbarkeit des Abstandes macht es überhaupt erst möglich, vor Ort den Messbereich des Messgeräts an den Schwankungsbereich des Absorptionskoeffizienten des jeweiligen Mediums anzupassen. Anderenfalls müssten gerade bei sehr stark absorbierenden Medien vor Ort etliche identische Messgeräte, die sich lediglich im Abstand von Sender und Empfänger, im Raster von beispielsweise 0,5 mm unterscheiden, ausprobiert werden, bis der optimale Abstand eruiert wurde.

Bei den Gehäusen wird bevorzugt ein Metall, insbesondere Edelstahl, für das Gehäusematerial gewählt. Dieses hat den Vorteil, dass es sich sehr schnell der Temperatur des zu messenden Mediums anpasst und dadurch Messergebnisse nicht durch Temperaturunterschiede zwischen den beiden bevorzugt stangenförmingen Gehäusen, genauer, den darin sitzenden Elektroniken verfälscht werden können. Ferner bilden diese Stahlrohre zusammen mit den anderen metallenen Gehäuseteilen einen zusammenhängenden, fast vollständig geschlossenen Faradayischen Käfig, sodass auch äusserst schwache Signale ohne Störung und Überkoppeln verarbeitet werden können.

In einem besonders bevorzugten Ausführungsbeispiel der Erfindung wird ein geringer Teil des Lichtes nach dem Sender abgezweigt und einem eigenem Schaltkreis zugeführt. Diese Lichtmenge wird als Vergleichsmenge mit der von den Empfängern nach dem Durchgang des Lichtes durch das zu messende Medium ermittelten Lichtmenge verwendet.

Es hat sich als ratsam erwiesen, das das Medium durchstrahlende Licht, das in der vorliegenden Erfindung eine bevorzugt grosse Querschnittsfläche aufweist, zu homogenisieren. Hierzu sind an geeigneten Stellen schwach bzw. stark streuende Filterscheiben vorgesehen, welche die bekannten Hot-Spots (Inhomogenitäten des Strahlungsfeldes) von Infrarotlichtsendern eliminieren. Dementsprechend sind auch die Empfänger in einem gewissen Abstand hinter den streuenden Filterscheiben angeordnet, um dieses homogenisierte Licht in geeignetem Masse zu empfangen. Bei den Empfängern für die Hauptmenge an Licht und auch für die abgezweigte Menge handelt es sich bevorzugt um Empfängerdioden, wobei hinter der jeweiligen Filterscheibe diese Empfängerdioden symmetrisch angeordnet sind. Hierbei haben sich vier verteilt angeordnete Empfängerdioden als am besten erwiesen.

Ohne Eliminierung der Hot-Spots und ohne das in dieser Erfindung bevorzugt zum Einsatz kommende grossflächige Messfeld würde es bei körnigen oder sonstwie inhomogenen Medien zu starken Schwankungen des Messsignals kommen.

Um die Empfindlichkeit der gesamten Vorrichtung zu steigern, hat es sich als ratsam erwiesen, die elektrischen Feldlinien zwischen Sender und Empfänger auf ein Minimum zu reduzieren. Dies geschieht erfindungsgemäss durch die Anordnung eines Metallgitters zwischen Sender und Empfänger, wobei das Metallgitter zwar 80% bis 90% des Lichtes, jedoch nur ein 1% bis 1‰ der elektrischen Feldlinien durchlässt. Verstärkt wird diese Empfindlichkeit noch dadurch, dass das durch das Metallgitter durchtretende Licht im Kanal vor den Empfängern umgelenkt wird. Dies geschieht mittels eines entsprechend angeordneten Umlenkspiegels.

Den Empfängern soll jeweils eine Schaltung zur Fremdlichtunterdrückung nachgeordnet sein. In einem bevorzugten Ausführungsbeispiel folgt auf einen Strom-Spannungswandler jeweils ein Vorfilter mit frequenzselektiver Verstärkung und Konstantlichtunterdrückung, ein Lock-In-Verstärker, ein Tiefpassfilter, ein Verstärker mit Störsignalbegrenzung, wobei die jeweiligen Verstärker mit Störsignalbegrenzung dann mit einem gemeinsamen Logarithmierverstärker verbunden sind. An diesen Logarithmierverstärker schliesst die Ausgangsschaltung an, welche zwei Ausgänge besitzt, einen für den stärker absorbierenden Materialanteil einer Gemischzusammensetzung, den anderen für den schwächer absorbierenden Materialanteil.

Die beiden Ausgänge (0...10V) können für die meisten Medien recht einfach abgeglichen werden. Der Abgleich wird mit zwei Substanzproben durchgeführt, die eine unterschiedliche und bekannte Gemischzusammensetzung besitzen. Durch Verdrehen zweier Stellpotentiometer wird die gewünschte Ausgangsspannung eingestellt.

Mit dieser erfindungsgemässen Vorrichtung können weitaus "undurchsichtigere" Substanzen gemessen werden als bisher.

Selbstverständlich erfüllt die erfindungsgemässe Vorrichtung auch die Anforderungen der DIN EN 27027 bzw. 150 7027.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf eine erfindungsgemässe Vorrichtung zur Ermittlung des Feststoff- und/oder des Flüssigkeitsgehaltes, insbesondere des Wassergehaltes eines flüssigen Mediums;
Figur 2 einen teilweise und schematisch dargestellten Ausschnitt der Vorrichtung gemäss Figur 1;
Figur 3 einen teilweise und schematisch dargestellten Ausschnitt eines weiteren Ausführungsbeispiels einer erfindungsgemässen Vorrichtung ähnlich Figur 2;
Figur 4 eine blockschaltbildliche Darstellung der Vorrichtung und insbesondere der Schaltung für die Vorrichtung gemäss Figur 1.

Eine erfindungsgemässe Vorrichtung zur Ermittlung des Feststoff- und/oder des Flüssigkeitsgehaltes, insbesondere des Wassergehaltes eines flüssigen Mediums, oder allgemeiner, zur Ermittlung der Gemischzusammensetzung beliebiger Medien, bzw. zur Stoffmengenmessung weist ein Grundgehäuse 1 auf, in dem sich eine weiter unten beschriebene Schaltung befindet. Auf dem Grundgehäuse 1 sitzen zwei bevorzugt stangenförmige Gehäuse 2 und 3 auf, die in einem Abstand d voneinander angeordnet sind. In einem Zwischenraum 4 zwischen den beiden Gehäusen 2 und 3 kann das zu untersuchende Medium fliessen, bzw. sich bewegen. Der Abstand d soll im übrigen kontinuierlich zwischen bevorzugt 0 bis 50 mm verstellbar sein.

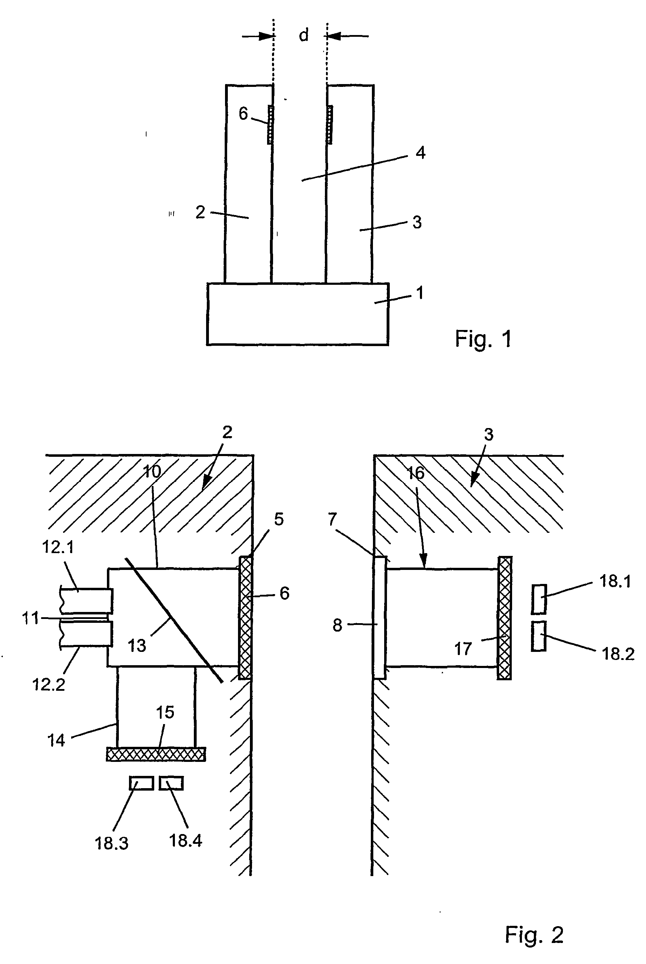

Das Gehäuse 2 weisst gemäss Figur 2 eine Gehäuseöffnung 5 auf, in die eine Filterscheibe, bevorzugt eine schwach streuende Filterscheibe 6 eingesetzt ist. Dieser Filterscheibe 6 gegenüber befindet sich in einer weiteren Gehäuseöffnung 7 des Gehäuses 3 eine durchsichtige Scheibe 8, insbesondere eine Glasscheibe (auch Quarz- oder Saphirscheibe).

Im Inneren des Gehäuses 2 schliesst an die Filterscheibe 6 ein Kanal 10 an, in dessen Boden 11 Sender 12.1 und 12.2 eingelassen sind, welche bevorzugt ein Infrarotlicht aussenden. Dieses Infrarotlicht, das bevorzugt von vier symetrisch angeordneten Sendern erzeugt wird, trifft, bevor es durch die Filterscheibe 6 dringt, auf eine durchlässige Spiegelscheibe 13, wobei ein geringer Teil (ca. 10%) des Infrarotlichtes in einen weiteren Kanal 14 abgelenkt wird, eine bevorzugt stark streuende Filterscheibe 15 durchdringt und von Empfängern 18.3 und 18.4 aufgenommen wird. Bei diesen Empfängern 18.3 und 18.4 handelt es sich bevorzugt um Empfängerdioden, wobei hinter der Filterscheibe 15 bevorzugt vier derartige Empfängerdioden symmetrisch angeordnet sind.

Sowohl die Filterscheibe 6 als auch die Filterscheibe 15 haben die Aufgabe Hot-Spots (Unsymmetrien des Strahlungsfeldes), die bei Infrarotlichtsendern vorkommen, auszugleichen und so den gesamten Strahl zu homogenisieren.

Gegenüber der Filterscheibe 6 schliesst an die Glasscheibe 8 ebenfalls ein Kanal 16 an, der wiederum von einer stark streuenden Filterscheibe 17 abgeschlossen ist. Hinter dieser Filterscheibe 17 befinden sich bevorzugt vier Empfänger (Empfängerdioden), wobei nur zwei Empfänger 18.1 und 18.2 gezeigt sind. Auch diese Filterscheibe 17 hat den Zweck, die Strahlung zu vergleichmässigen und so vergleichmässigt auf die vier Fotoempfänger zu übertragen.

Die Gehäuse 2 und 3 bestehen im übrigen bevorzugt aus Stahlrohren, wodurch eine Wärmevergleichmäsigung erzielt wird, gleich mit welchem Medium die Gehäuse in Berührung kommen. Die Gehäuse 2 und 3 erreichen nach kürzester Zeit die Temperatur des Mediums. Alle Empfängerdioden 18.1, 18.2, 18.3 sowie 18.4 besitzen daher praktisch immer die gleiche Temperatur.

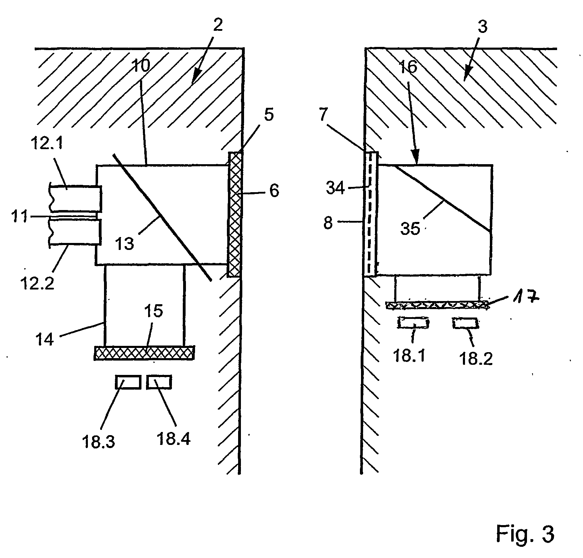

Das Ausführungsbeispiel einer erfindungsemässen Vorrichtung gemäss Figur 3 unterscheidet sich von demjenigen nach Figur 2 dadurch, dass im Strahlgang zwischen den Sendern 12.1 und 12.2 und den Empfängern 18.1 und 18.2 ein Metallgitter 34 und im Kanal 16 ein Umlenkspiegel 35 vorgesehen sind. Das Metallgitter 34 befindet sich in der Scheibe 8, es kann jedoch auch an einer beliebigen anderen Stelle zwischen Sender um Empfänger angeordnet werden. Das Metallgitter hat den Vorteil, dass es zwar ca. 80% bis 90% des Lichtes durchtreten lässt, jedoch nur etwa 1% bis 1%o des elektrischen Feldes. Die elektrischen Feldlinien gehen nur schwer durch die Gitterfreiräume, die meisten elektrischen Feldlinien werden von dem Metallgitter angezogen und aufgenommen.

Durch dieses Metallgitter 34 wird die Empfindlichkeit der Vorrichtung ganz erheblich gesteigert und zwar in einem Masse von etwa 1 zu 10 Millionen.

Um diese Empfindlichkeit nochmals zu steigern, ist der Umlenkspielgel 35 vorgesehen, welcher die ankommenden Strahlen etwa um 90° auf die Empfänger 18.1 und 18.2 umlenkt. Gerade in der nähe bspw. einer Tauchpumpe, von der sehr viele Störungen ausgehen, ist diese Steigerung der Empfindlichkeit der Vorrichtung von entscheidender Bedeutung.

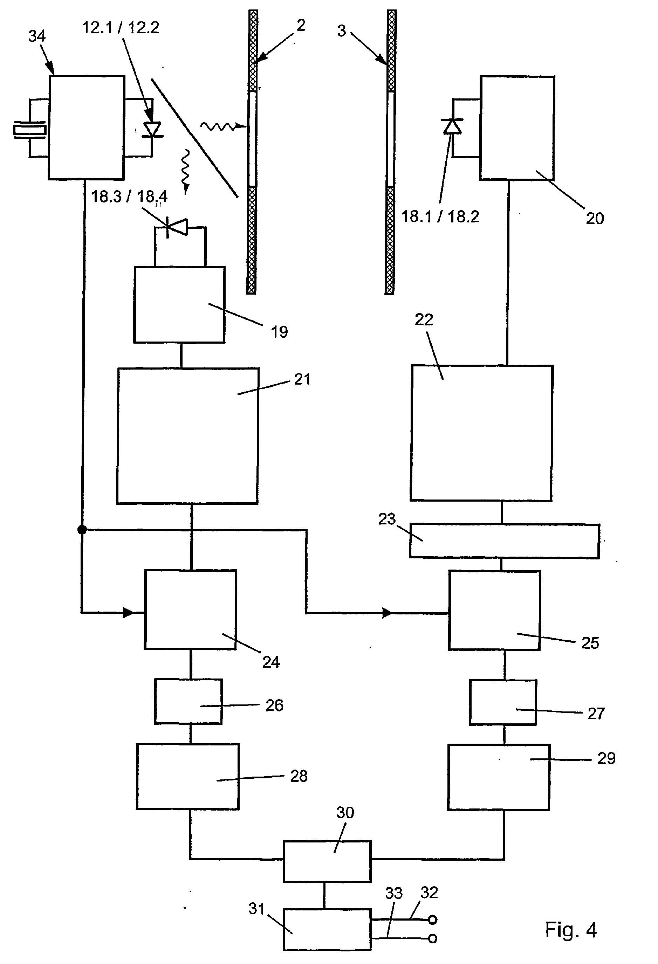

Gemäss Figur 4 handelt es sich bei den Sendern 12.1 und 12.2 um quarzstabilisierte Impulserzeuger für eine Frequenz f. Diese Frequenz f findet Eingang auch in jeweils einen Lock-In-Verstärker 24 bzw. 25, die in jeweils auf die Empfänger 18.3 und 18.4 bzw. 18.1 und 18.2 nachfolgende Schaltungen eingeschaltet sind.

Jedem Empfänger 18.3/18.4 bzw. 18.1./18.2 folgt ein Strom-Spannungswandler 19 bzw. 20 nach. Die Signale von diesem Strom-Spannungswandler 19 bzw. 20 gelangen dann in einen Vorfilter 21 bzw. 22 mit frequenzselektiver Verstärkung und Konstantlichtunterdrückung. In diesem Vorfilter werden diejenigen Signale besonders hervorgehoben, die in der Frequenz mit der Frequenz f übereinstimmen. Alle anderen Signale werden stark abgeschwächt.

Dem Vorfilter 22 im Empfängerteil wird bevorzugt noch ein Zusatzverstärker 23 mit fernsteuerbarem Verstärkungsfaktor nachgeordnet.

Als nächstes folgen in beiden Schaltungen die oben erwähnten Lock-In-Verstärker 24 bzw. 25, sowie die für deren korrekte Funktion erforderlichen Tiefpassfilter 26 bzw. 27. Das Funktionsprinzip dieser Baugruppen ist hinreichend bekannt: Es werden ausschliesslich diejenigen Signale weitergeleitet, die in Frequenz und Phase mit der Impulsanregungsfrequenz f übereinstimmen. Alle anderen Signale werden stark unterdrückt. Die Lock-In-Verstärker 24 bzw. 25 in Verbindung mit den Filtern 26 bzw. 27 verhalten sich wie extrem schmalbandige sowie extrem stabile Bandpassfilter. Gleichzeitig kommt es durch die Phasenselektivität zu einer starken Unterdrückung von unerwünschten, kapazitiv übergekoppelten Signalanteilen.

Auf die Filter 26 bzw. 27 folgt dann jeweils ein Verstärker 28 bzw. 29 mit Störsignalbegrenzung. Dieser hat das Ziel, das Messsignal noch einmal zu verstärken, und ausserdem die von den üblichen Logarithmierverstärkern bekannten Unstabilitäten bei sehr kleinen Signalen (log(0)=-∞!) und die nicht erlaubten negativen Spannungen abzufangen.

Das sich jetzt ergebende von Störungen und Fremdlicht unbeeinflusste Messsignal wird sowohl von dem Verstärker 28 als auch von dem Verstärker 29 einem Logarithmierverstärker 30 zugeführt, auf den eine Ausgangsschaltung 31 folgt, welche zwei Ausgänge 32 und 33 hat. Am Ausgang 32 kann der Feststoffgehalt, oder allgemeiner der stärker absorbierende Materialanteil (0-10 Volt) und am Ausgang 33 der Wassergehalt, oder allgemeiner, der schwächer absorbierende Materialanteil einer Gemischzusammensetzung (0-10 Volt) angezeigt werden.

### Positionszahlenliste

| | | | | | |
|---|---|---|---|---|---|
| 1 | Grundgehäuse | 34 | Metallgitter | 67 | |
| 2 | Gehäuse | 35 | Umlenkspiegel | 68 | |
| 3 | Gehäuse | 36 | | 69 | |
| 4 | Zwischenraum | 37 | | 70 | |
| 5 | Gehäuseöffnung | 38 | | 71 | |
| 6 | Filterscheibe | 39 | | 72 | |
| 7 | Gehäuseöffnung | 40 | | 73 | |
| 8 | Scheibe | 41 | | 74 | |
| 9 | | 42 | | 75 | |
| 10 | Kanal | 43 | | 76 | |
| 11 | Boden | 44 | | 77 | |
| 12 | Sender | 45 | | 78 | |
| 13 | Spiegelscheibe | 46 | | 79 | |
| 14 | Kanal | 47 | | | |
| 15 | Filterscheibe | 48 | | | |
| 16 | Kanal | 49 | | d | Abstand |
| 17 | Filterscheibe | 50 | | | |
| 18 | Empfänger | 51 | | | |
| 19 | Stromspannungswandler | 52 | | | |
| 20 | Stromspannungswandler | 53 | | | |
| 21 | Vorfilter | 54 | | | |
| 22 | Vorfilter | 55 | | | |
| 23 | Zusatzverstärker | 56 | | | |
| 24 | Lock-In-Verstärker | 57 | | | |
| 25 | Lock-In-Verstärker | 58 | | | |
| 26 | Tiefpassfilter | 59 | | | |
| 27 | Tiefpassfilter | 60 | | | |
| 28 | Verstärker | 61 | | | |
| 29 | Verstärker | 62 | | | |
| 30 | Logarithmierverstärker | 63 | | | |
| 31 | Ausgangsschaltung | 64 | | | |
| 32 | Ausgang | 65 | | | |
| 33 | Ausgang | 66 | | | |

## Patentansprüche

1. Verfahren zur Ermittlung der Gemischzusammensetzung einer Flüssigkeit mittels Ermittlung der Absorption eines Lichtes, insbesondere Infrarotlichtes, welches von einem Sender (12.1, 12.2) in einem ersten Gehäuse (2) in das zu untersuchende Medium ausgesandt und dessen nichtabsorbierte bzw. nichtreflektierte Bestandteile von einem Empfänger (18.1, 18.2) in einem zweiten Gehäuse (3) erfasst werden, wobei das Licht direkt von Sender (12.1, 12.2) zu Empfänger (18.1, 18.2) durch das Medium geschickt wird und das Licht vor und/oder nach dem Medium einen Kanal (10, 16) in einem der beiden Gehäuse (2, 3) durchquert und zumindest einmal mittels optischen Mitteln (6, 17) gestreut und der Abstand (d) zwischen den beiden Gehäusen (2, 3), d.h., der Lichtweg in der Flüssigkeit verändert wird.

2. Verfahren nach Anspruch 1, **dadurch gekennzeichnet, dass** ein Teil des Lichtes nach dem Sender (12.1, 12.2) abgezweigt und in einem Schaltkreis verwendet wird.

3. Verfahren nach Anspruch 1 oder 2, **dadurch gekennzeichnet, dass** zwei Ausgänge (32, 33) vorgesehen werden, so dass die Gemischzusammensetzung angezeigt wird.

4. Verfahren nach Anspruch 3, **dadurch gekennzeichnet, dass** eine Abgleich der beiden Ausgänge (32, 33) mit zwei Substanzproben durchgeführt wird, welche eine unterschiedliche und bekannte Gemischzusammensetzung besitzen.

5. Vorrichtung zur Ermittlung der Gemischzusammensetzung einer Flüssigkeit mittels Ermittlung der Absorption eines Lichtes, insbesondere Infrarotlichtes, welches von einem Sender (12.1, 12.2) in einem ersten Gehäuse (2) in das Medium ausgesandt und dessen nichtabsorbierten bzw. nichtreflektierten Bestandteile von einem Empfänger (18.1, 18.2) in einem zweiten Gehäuse (3) erfasst werden, wobei Sender (12.1, 12.2) und/oder Empfänger (18.1, 18.2) fern einer Gehäuseöffnung (5, 7) in das Innere des jeweiligen Gehäuses (2, 3) eingesetzt - ist/sind und der Abstand (d) zwischen den beiden Gehäusen (2 und 3), bevorzugt kontinuierlich, veränderbar ist, wobei zwischen Sender (12.1, 12.2) und Empfänger (18.1, 18.2) optische Mittel (6, 17) zur Streuung des Lichtes vorgesehen sind.

6. Vorrichtung nach Anspruch 5, **dadurch gekennzeichnet, dass** zwischen Sender (12.1, 12.2) und Empfänger (18.1, 18.2) zumindest eine streuende Filterscheibe (6, 17) eingesetzt ist.

7. Vorrichtung nach Anspruch 5 bis 6, **dadurch gekennzeichnet, dass** Sender (12.1, 12.2) und/oder Empfänger (18.1, 18.2) jeweils in einem bevorzugt stangenförmigen Gehäuse (2, 3) angeordnet sind.

8. Vorrichtung nach Anspruch 7, **dadurch gekennzeichnet, dass** zwei stangenförmige Gehäuse (2, 3) etwa parallel zueinander angeordnet sind und einen Abstand (4) zwischen sich für das zu untersuchende Medium frei lassen, wobei die Gehäuseöffnungen (5, 7) von Sender (12.1, 12.2) und Empfänger (18.1, 18.2) sich etwa gegenüberliegen.

9. Vorrichtung nach Anspruch 8, **dadurch gekennzeichnet, dass** zwischen Sender (12.1, 12.2) und seiner ihm zugeordneten Gehäuseöffnung (5) und/oder zwischen Empfänger (18.1, 18.2) und seiner ihm zugeordneten Gehäuseöffnung (7) ein Kanal (10, 16) vorgesehen ist.

10. Vorrichtung nach wenigstens einem der Ansprüche 5 bis 9, **dadurch gekennzeichnet, dass** als Empfänger (18.1, 18.2) eine Mehrzahl von verteilt angeordneten Dioden mit nachfolgendem Strom-Spannungswandler (20) vorgesehen sind.

11. Vorrichtung nach Anspruch 10, **dadurch gekennzeichnet, dass** die Dioden (18.1, 18.2) in einem Abstand hinter einer streuenden Filterscheibe (17) angeordnet sind.

12. Vorrichtung nach wenigstens einem der Ansprüche 5 bis 11, **dadurch gekennzeichnet, dass** zwischen Sender (12.1, 12.2) und Empfänger (18.1, 18.2) ein Metallgitter angeordnet ist.

13. Vorrichtung nach wenigstens einem der Ansprüche 9 bis 12, **dadurch gekennzeichnet, dass** im Kanal (16) ein Umlenkspiegel angeordnet it.

14. Vorrichtung nach wenigstens einem der Ansprüche 5 bis 13 **dadurch gekennzeichnet, dass** dem Sender (12.1, 12.2) eine Einrichtung (13) zum Ablenken eines Teils des Lichtes nachgeordnet ist.

15. Vorrichtung nach Anspruch 14, **dadurch gekennzeichnet, dass** die Einrichtung eine durchlässige Spiegelscheibe (13) ist.

16. Vorrichtung nach Anspruch 14 oder 15, **dadurch gekennzeichnet, dass** die Einrichtung (13) zum Ablenken eines Teils des Lichtes dieses Licht auf verteilt in einem Abstand hinter einer bevorzugt stark streuenden Filterscheibe (15) angeordnete Empfänger (18.3, 18.4), insbesondere Dioden, richtet.

17. Vorrichtung nach wenigstens einem der Ansprüche 5 bis 16, **dadurch gekennzeichnet, dass** die Empfänger (18.1, 18.2) über eine Fremdlichtunterdrückung beinhaltende Schaltung mit einer Ausgangsschaltung (31) verbunden sind.

18. Vorrichtung nach wenigstens einem der Ansprüche 5 bis 17, **dadurch gekennzeichnet, dass** der die abgezweigte Lichtmenge ermittelnde Strom-Spannungswandler (19) ebenfalls über eine Fremdlichtunterdrückung beinhaltende Schaltung mit einer Ausgangsschaltung (31) verbunden ist.

19. Vorrichtung nach Anspruch 17 oder 18, **dadurch gekennzeichnet, dass** die Schaltung einen Vorfilter (21, 22) mit frequenzselektiver Verstärkung und Konstantlichtunterdrückung, einen Zusatzverstärker mit fernsteuerbarem Verstärkungsfaktor (23), einen Lock-In-Verstärker (24, 25) einen Filter (26, 27) einen Verstärker (28, 29) mit Störsignalbegrenzung und eine Verbindung zu einem Logarithmierverstärker (30) aufweist, welcher der Ausgangsschaltung (31) vorgeschaltet ist.

20. Vorrichtung nach Anspruch 19, **dadurch gekennzeichnet, dass** der Lock-In-Verstärker (24, 25) jeweils eine Verbindung mit dem Sender (12.1, 12.2) aufweist.

21. Vorrichtung nach Anspruch 19 oder 20, **dadurch gekennzeichnet, dass** die Ausgangsschaltung (31) zwei Ausgänge (32, 33) aufweist, einen für den stärker absorbierenden Materialanteil und der andere für den schwächer absorbierenden Materialanteil einer Gemischzusammensetzung.

22. Vorrichtung nach wenigstens einem der Ansprüche 17 bis 21, **dadurch gekennzeichnet, dass** die Schaltung/en in einem Gehäuse (1) untergebracht sind, von dem die bevorzugten Gehäusestangen (2, 3) abragen.

23. Vorrichtung nach Anspruch 22, **dadurch gekennzeichnet, dass** die bevorzugten Gehäusestangen (2, 3) aus Stahl, bevorzugt Edelstahl, bestehen.

## Claims

1. Method of determining the mixture composition of a fluid by determining the absorption of light, in particular infrared light, which is emitted by a transmitter (12.1, 12.2) in a first housing (2) into the medium to be examined and the non-absorbed and/or non-reflected constituents of which are picked up by a receiver (18.1, 18.2) in a second housing (3), wherein the light is sent directly from transmitter (12.1, 12.2) to receiver (18.1, 18.2) through the medium and the light before and/or after the medium passes through a channel (10, 16) in one of the two housings (2, 3) and is diffused at least once by optical means (6, 17) and the distance (d) between the two housings (2, 3), i.e. the optical path length in the fluid is measured.

2. Method according to claim 1, **characterized in that** some of the light is diverted after the transmitter (12.1, 12.2) and used in a switching circuit.

3. Method according to claim 1 or 2, **characterized in that** two outputs (32, 33) are provided so that the mixture composition is displayed.

4. Method according to claim 3, **characterized in that** a calibration adjustment of the two outputs (32, 33) is conducted with two substance specimens that have a different and known mixture composition.

5. Device for determining the mixture composition of a fluid by determining the absorption of light, in particular infrared light, which is emitted by a transmitter (12.1, 12.2) in a first housing (2) into the medium to be examined and the non-absorbed and/or non-reflected constituents of which are picked up by a receiver (18.1, 18.2) in a second housing (3), wherein transmitter (12.1, 12.2) and/or receiver (18.1, 18.2) is/are inserted remote from a housing opening (5, 7) into the interior of the respective housing (2, 3) and the distance (d) between the two housings (2 and 3) is variable, preferably continuously, wherein between transmitter (12.1, 12.2) and receiver (18.1, 18.2) optical means (6, 17) are provided for diffusing the light.

6. Device according to claim 5, **characterized in that** between transmitter (12.1, 12.2) and receiver (18.1, 18.2) at least one diffusing filter screen (6, 17) is inserted.

7. Device according to claim 5 to 6, **characterized in that** transmitter (12.1, 12.2) and/or receiver (18.1, 18.2) are disposed in each case in a preferably bar-shaped housing (2, 3).

8. Device according to claim 7, **characterized in that** two bar-shaped housings (2, 3) are disposed approximately parallel to one another and leave free between them a space (4) for the medium to be examined, wherein the housing openings (5, 7) of transmitter (1.1, 12.2) and receiver (18.1, 18.2) lie approximately opposite one another.

9. Device according to claim 8, **characterized in that** a channel (10, 16) is provided between the transmitter (12.1, 12.2) and the housing opening (5) associated therewith and/or between the receiver (18.1, 18.2) and the housing opening (7) associated therewith.

10. Device according to at least one of claims 5 to 9, **characterized in that** there is provided as receiver (18.1, 18.2) a plurality of diodes arranged in a distributed manner with a downstream current-to-voltage converter (20).

11. Device according to claim 10, **characterized in that** the diodes (18.1, 18.2) are disposed with clearance behind a diffusing filter screen (17).

12. Device according to at least one of claims 5 to 11, **characterized in that** a metal grating is disposed between transmitter (12.1, 12.2) and receiver (18.1, 18.2).

13. Device according to at least one of claims 9 to 12, **characterized in that** a deflecting mirror is disposed in the channel (16).

14. Device according to at least one of claims 5 to 13, **characterized in that** disposed downstream of the transmitter (12.1, 12.2) is a device (13) for diverting some of the light.

15. Device according to claim 14, **characterized in that** the device is a transparent reflector disk (13).

16. Device according to claim 14 or 15, **characterized in that** the device (13) for diverting some of the light directs said light towards receivers (18.3, 18.3), in particular diodes, disposed in a distributed manner with clearance behind a preferably highly diffusive filter screen (15).

17. Device according to at least one of claims 5 to 16, **characterized in that** the receivers (18.1, 18.2) are connected to an output circuit (31) by a circuit containing extraneous light suppression means.

18. Device according to at least one of claims 5 to 17, **characterized in that** the current-to-voltage converter (19) that detects the diverted light quantity is likewise connected to an output circuit (31) by a circuit containing extraneous light suppression means.

19. Device according to claim 17 or 18, **characterized in that** the circuit comprises a coarse filter (21, 22) with frequency-selective amplification and constant-light suppression, a booster amplifier with a remotely controllable gain factor (23), a lock-in amplifier (24, 25), a filter (26, 27), an amplifier (28, 29) with interference signal limitation as well as a connection to a logarithmic amplifier, which is series-connected to the output circuit (31).

20. Device according to claim 19, **characterized in that** the lock-in amplifier (24, 25) has in each case a connection to the transmitter (12.1, 12.2).

21. Device according to claim 19 or 20, **characterized in that** the output circuit (31) has two outputs (32, 33), one for the more absorbent material fraction and the other for the less absorbent material fraction of a mixture composition.

22. Device according to at least one of claims 17 to 21, **characterized in that** the circuit(s) are accommodated in a housing (1), from which the preferred housing bars (2, 3) project.

23. Device according to claim 22, **characterized in that** the preferred housing bars (2, 3) are made of steel, preferably high-grade steel.

## Revendications

1. Procédé pour déterminer la composition de mélange d'un liquide au moyen de la détermination de l'absorption d'une lumière, en particulier d'une lumière infrarouge, qui est envoyée par un émetteur (12.1, 12.2) dans un premier boîtier (2) vers le fluide à examiner et dont les composantes non absorbées ou non réfléchies sont détectées par un récepteur (18.1, 18.2) dans un deuxième boîtier (3), la lumière étant envoyée directement de l'émetteur (12.1, 12.2) au récepteur (18.1, 18.2) à travers le fluide et la lumière traversant, avant et/ou après le fluide, un canal (10, 16) dans l'un des deux boîtiers (2, 3) et étant diffusée au moins une fois au moyen de moyens optiques (6, 17) et la distance (d) entre les deux boîtiers (2, 3), c'est-à-dire le trajet de lumière, dans le liquide étant modifiée au moins une fois.

2. Procédé selon la revendication 1, **caractérisé par le fait qu'**une partie de la lumière est dérivée après l'émetteur (12.1, 12.2) et utilisée dans un circuit de commutation.

3. Procédé selon la revendication 1 ou 2, **caractérisé par le fait qu'**il est prévu deux sorties (32, 33), de sorte que soit affichée la composition de mélange.

4. Procédé selon la revendication 3, **caractérisé par le fait qu'**un ajustage des deux sorties (32, 33) est effectué à l'aide de deux échantillons de substance qui possèdent une composition de mélange différente et connue.

5. Dispositif pour déterminer la composition de mélange d'un liquide au moyen de la détermination de l'absorption d'une lumière, en particulier d'une lumière infrarouge qui est envoyée par un émetteur (12.1, 12.2) dans un premier boîtier (2) vers le fluide et dont les composantes non absorbées ou non réfléchies sont détectées par un récepteur (18.1, 18.2) dans un deuxième boîtier (3), l'émetteur (12.1, 12.2) et le récepteur (18.1, 18.2) étant placés loin d'une ouverture de boîtier (5, 7) à l'intérieur du boîtier respectif (2, 3) et la distance (d) entre les deux boîtiers (2 et 3) étant variable, de préférence en continu, entre l'émetteur (12.1, 12.2) et le récepteur (18.1, 18.2) étant prévus des moyens optiques (6, 17) pour la diffusion de la lumière.

6. Dispositif selon la revendication 5, **caractérisé par le fait qu'**entre l'émetteur (12.1, 12.2) et le récepteur (16.1, 18.2) est placé au moins un disque de filtre diffuseur (6, 17).

7. Dispositif selon la revendication 5 à 6, **caractérisé par le fait que** l'émetteur (12.1, 12.2) et/ou le récepteur (18.1, 18.2) sont disposés, chacun, dans un boîtier (2, 3), de préférence en forme de boudin.

8. Dispositif selon la revendication 7, **caractérisé par le fait que** deux boîtiers en forme de boudin (2, 3) sont disposés environ parallèles entre eux, et laissent entre eux une distance (4) pour le fluide à examiner, les ouvertures de boîtier (5, 7) de l'émetteur (12.1, 12.2) et du récepteur (18.1, 18.2) étant environ opposées l'une à l'autre.

9. Dispositif selon la revendication 8, **caractérisé par le fait qu'**entre l'émetteur (12.1, 12.2) et son ouverture de boîtier (5) lui associée et/ou entre le récepteur (18.1, 18:2) et son ouverture de boîtier (7) lui associée est prévu un canal (10, 16).

10. Dispositif selon au moins l'une des revendications 5 à 9, **caractérisé par le fait qu'**il est prévu, comme récepteurs (18.1, 18.2) une pluralité de diodes disposées réparties avec un convertisseur courant-tension (20) connecté en aval.

11. Dispositif selon la revendication 10, **caractérisé par le fait que** les diodes (18.1, 18.2) sont disposées à une distance derrière un disque de filtre diffuseur (17).

12. Dispositif selon au moins l'une des revendications 5 à 11, **caractérisé par le fait qu'**entre l'émetteur (12.1, 12.2) et le récepteur (18.1, 18.2) est disposé un treillis métallique.

13. Dispositif selon au moins l'une des revendications 9 à 12, **caractérisé par le fait que** dans le canal (16) est disposé un miroir de renvoi.

14. Dispositif selon au moins l'une des revendications 5 à 13, **caractérisé par le fait qu'**après l'émetteur (12.1, 12.2) est disposé un dispositif (13) destiné à dévier une partie de la lumière.

15. Dispositif selon la revendication 14, **caractérisé par le fait que** le dispositif est une plaque miroir perméable (13).

16. Dispositif selon la revendication 14 ou 15, **caractérisé par le fait que** le dispositif (13) destiné à dévier une partie de la lumière oriente cette lumière vers des récepteurs (18.3, 18.4), en particulier diodes, disposés à une distance derrière un disque de filtre diffuseur (15).

17. Dispositif selon au moins l'une des revendications 5 à 16, **caractérisé par le fait que** les récepteurs (18.1, 18.2) sont reliés à un circuit de sortie (31) par l'intermédiaire d'un circuit contenant une suppression de lumière étrangère.

18. Dispositif selon au moins l'une des revendications 5 à 17, **caractérisé par le fait que** le convertisseur courant-tension (19) déterminant la quantité de lumière déviée est également relié à un circuit de sortie (31) par l'intermédiaire d'un circuit contenant une suppression de lumière étrangère.

19. Dispositif selon la revendication 17 ou 18, **caractérisé par le fait que** le circuit présente un préfiltre (21, 22) à amplification sélective en fréquence et suppression de lumière constante, un amplificateur additionnel à facteur d'amplification réglable à distance (23), un amplificateur à verrouillage (24, 25), un filtre (26, 27), un amplificateur (28, 29) à limitation de signal parasitaire et une connexion avec un amplificateur de logarithmisation (30) qui est connecté en amont du circuit de sortie (31).

20. Dispositif selon la revendication 19, **caractérisé par le fait que** l'amplificateur à verrouillage (24, 25) présente chaque fois une connexion avec l'émetteur (12.1, 12.2).

21. Dispositif selon la revendication 19 ou 20, **caractérisé par le fait que** le circuit de sortie (31) présente deux sorties (32, 33), un pour la part de matière plus absorbante et l'autre pour la part de matière moins absorbante d'une composition de mélange.

22. Dispositif selon au moins l'une des revendications 17 à 21, **caractérisé par le fait que** le ou les circuits sont placés dans un boîtier (1) duquel ressortent les tiges de boîtier préférées (2, 3).

23. Dispositif selon la revendication 22, **caractérisé par le fait que** les tiges de boîtier préférées (2, 3) sont en acier, de préférence en acier inoxydable.
